# FASCICULE DE BREVET EUROPEEN

(11) **EP 2 036 474 B1**
(45) Date de publication et mention de la délivrance du brevet: **17.11.2010**
(21) Numéro de dépôt: 08356124.1
(22) Date de dépôt: 10.09.2008
(51) Int. Cl.: A47J 45/06

(54) **Dispositif de fixation de poignée sur un article culinaire avec un pontet soudé**
Befestigungsvorrichtung eines Griffs auf einem Kochgerät mit einem angeschweißtem Bügel
Device for attaching a handle to a culinary item with a welded valve bridge

(30) Priorité: 12.09.2007 FR 0706386
(43) Date de publication de la demande: 18.03.2009
(73) Titulaire: SEB SA, 69130 Ecully (FR)
(72) Inventeur: Chatelain, Frédéric, 74540 Chainaz Les Frasses (FR)
(74) Mandataire: Kiehl, Hubert

(56) Documents cités:
- DE-U1- 8 703 267

## Description

La présente invention concerne un dispositif de fixation d'une poignée sur un article culinaire tel qu'une casserole, une poêle, etc., en particulier un dispositif de fixation comportant un pontet en forme de U soudé sur l'article culinaire.

On connaît du document GB 1261492 un dispositif de fixation d'une poignée comprenant deux pontets en forme de U soudés par les extrémités antérieures de leurs branches à la calotte d'un article culinaire, une poignée comportant deux logements aptes à recevoir les deux pontets, des moyens de connexion s'étendant à travers la poignée et dans des ouvertures situées dans les extrémités postérieures des pontets.

La soudure utilisée pour fixer les pontets à l'article culinaire est du type à décharge de condensateur. Une petite protubérance au centre de l'extrémité de chaque branche du U permet l'amorçage au début du cycle de soudage avec la paroi de l'article culinaire, de telle sorte que la soudure se développe de façon plus ou moins importante sur les extrémités des deux branches du pontet à partir des protubérances.

Ce type de soudure s'étendant à partir d'un point vers les extrémités des deux branches du pontet présente l'inconvénient de ne pas garantir des caractéristiques de tenue mécanique importante entre le pontet et l'article culinaire. De plus le seul moyen d'évaluer la soudure est de faire un test destructif d'arrachement. Ce type de soudure présente également l'inconvénient de laisser des marques à l'intérieur de l'article culinaire, en face des points de soudure.

Un autre document représentant l'art antérieur est DE 8703267 U.

Le but de la présente invention est de remédier aux inconvénients précités et de proposer un dispositif de fixation comportant un pontet soudé sur une calotte d'un article culinaire qui assure une fixation très résistante, sûre et durable.

Un autre but de l'invention est de proposer un dispositif de fixation comportant un pontet soudé sur une calotte d'un article culinaire dont la qualité de la soudure est simple à vérifier par un moyen visuel.

Un autre but de l'invention est de proposer un dispositif de fixation comportant un pontet soudé sur une calotte d'un article culinaire qui ne laisse pas de marque de soudure à l'intérieur de l'article culinaire, qui soit simple et économique à mettre en oeuvre.

Ces buts sont atteints avec un dispositif de fixation d'une poignée sur une calotte d'un article culinaire comprenant un pontet en forme de U adapté à être soudé par les extrémités antérieures des deux branches du U à la calotte de l'article culinaire et comprenant une ouverture à sa deuxième extrémité postérieure, une poignée dont une extrémité comporte un logement qui est adapté à recevoir le pontet, des moyens de maintien de la poignée sur la calotte de l'article culinaire utilisant l'ouverture du pontet caractérisé en ce que la tranche de l'extrémité de chaque branche du pontet en U comporte au moins deux protubérances séparées par un évidement.

Selon l'invention, le dispositif de fixation comporte un pontet soudé en quatre points sur la calotte de l'article culinaire, ce qui permet à ce dispositif de présenter une résistance optimale aux efforts liés à l'utilisation de l'article culinaire.

Le fait d'augmenter le nombre de points de soudure à quatre points permet de réaliser des points plus petits qui ne marquent pas l'intérieur de l'article culinaire.

Cette construction permet également de vérifier la qualité de la soudure par l'analyse dimensionnelle faite visuellement de la zone non soudée entre deux protubérances.

Par la tranche, on comprend le bord de l'extrémité de chaque branche du pontet en U. Ainsi, chaque protubérance s'étend depuis la tranche de l'extrémité de chaque branche du pontet en U, dans le prolongement de chaque branche.

Avantageusement, l'évidement entre les deux protubérances présente une largeur L comprise entre 1 et 5 millimètres, de préférence 3 millimètres.

De plus, l'évidement présente une profondeur P comprise entre 0,8 et 3 millimètres, de préférence 1,5 millimètres.

Ces dispositions permettent d'obtenir un espacement des points de soudure suffisant pour garantir la résistance du dispositif de fixation.

Ces dispositions permettent également, en évaluant visuellement la longueur de la zone non soudée, de vérifier la qualité de la soudure.

Avantageusement, la matière du pontet est un acier inoxydable.

Cette disposition permet de garantir la durabilité du dispositif de fixation.

De préférence, le pontet est fabriqué par découpe d'un feuillard d'épaisseur comprise entre 0,6 millimètre et 1,2 millimètres, de préférence 0,8 millimètre.

Cette disposition permet d'optimiser le coût du pontet, tant du point de vue quantité de matière mise en oeuvre que du point de vue procédé de fabrication.

L'invention sera mieux comprise à l'étude d'un mode de réalisation pris à titre nullement limitatif et illustré dans les figures annexées dans lesquelles :
- La figure 1 est une vue éclatée en perspective d'un dispositif de fixation d'une poignée sur une calotte d'un article culinaire selon un mode particulier de réalisation de l'invention.
- La figure 2 est une vue en perspective du pontet avant soudure selon un mode particulier de réalisation de l'invention.
- La figure 3 illustre une vue en coupe du dispositif de la figure 1 suivant l'axe de la poignée.

Seuls les éléments nécessaires à la compréhension de l'invention ont été représentés. Pour faciliter la lecture des dessins les mêmes éléments portent les mêmes références d'une figure à l'autre.

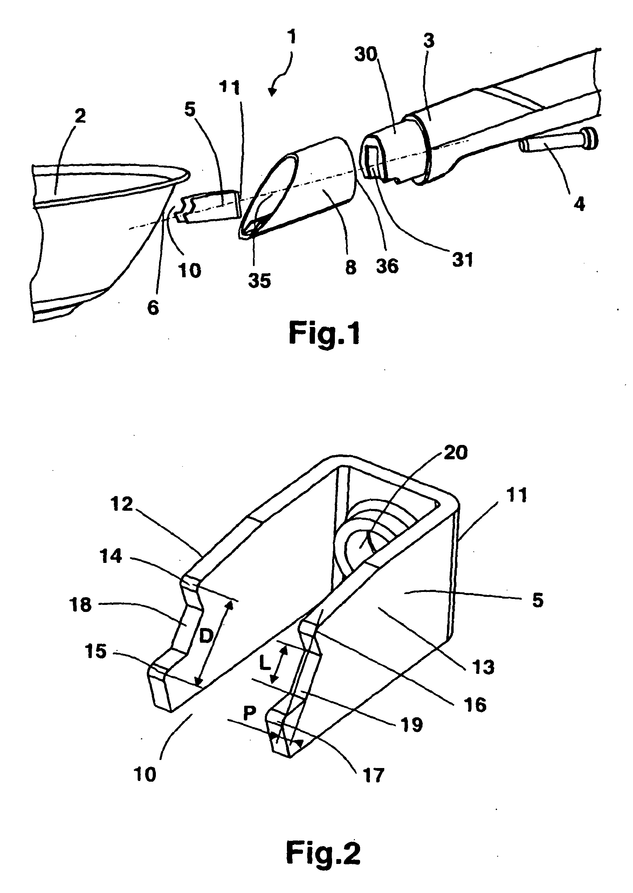

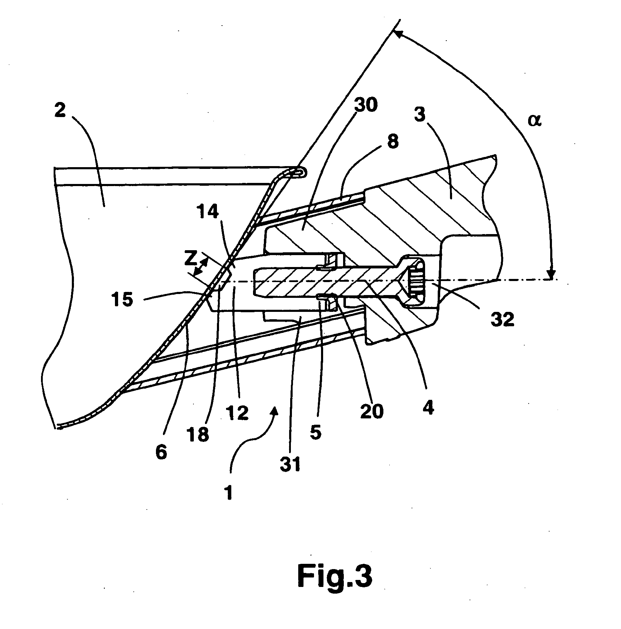

Tel que visible aux figures 1 et 3, le dispositif de fixation 1 selon un mode particulier de réalisation de l'invention permet de fixer une poignée 3 à une calotte 6 d'un article culinaire 2. Il est constitué d'un pontet 5, d'une embase 8 entourant une extrémité 30 de la poignée 3 et d'une vis 4.

Tel que visible à la figure 2, le pontet 5 comporte trois parties plates prenant la forme générale d'un U dont deux branches 12, 13 sont parallèles. Le pontet 5 comprend une extrémité antérieure 10 formée par les deux extrémités des deux branches 12, 13. Chaque extrémité des deux branches 12 et 13 comporte deux protubérances 14, 15 et 16, 17 constituées dans l'épaisseur matière du pontet 5 et espacées par exemple d'une distance D de six millimètres. Chaque protubérance 14, 15, 16, 17 a la forme d'un triangle équilatéral.

En d'autres termes, les deux protubérances 14, 15 ou 16, 17 d'une extrémité d'une branche 12 ou 13 du U sont séparées par un évidement 18 ou 19 trapézoïdal ayant une petite base d'une largeur L comprise entre 1 et 5 millimètres, de préférence 3 millimètres, une grande base d'une largeur comprise entre 4 et 8 millimètres, de préférence 6 millimètres et une profondeur P comprise entre 0,8 et 3 millimètres, de préférence 1,5 millimètres.

L'espace entre deux protubérances 14, 15 ou 16, 17 et la forme de chaque protubérance sont dimensionnés pour qu'après soudure, il subsiste une zone Z non soudée entre les deux protubérances 14, 15 et 16, 17 transformées en points de soudure (fig.3).

Le pontet 5 est adapté à être fixé à la calotte 6 de l'article culinaire 2 de manière horizontale par soudure électrique au moyen d'une soudeuse à générateur à moyenne fréquence. Ce procédé de soudure permet de limiter l'effort à appliquer sur le pontet 5 contre la calotte 6 de l'article culinaire 2 lors de l'envoi du courant pour fusionner les protubérances 14, 15 et 16, 17 avec la calotte 6.

Ce procédé de soudure est bien adapté au cas des poêles où l'angle α entre la calotte 6 de l'article culinaire 2 et un plan horizontal peut être supérieur à 30° (fig.3); la faible pression lors de la soudure permet d'éviter le glissement du pontet sur la calotte.

Le pontet 5 est en position une fois que les droites passant par les sommets des bossages de chaque extrémité des branches du pontet sont parallèles à la calotte de l'article culinaire.

La matière du pontet 5 et la matière de la calotte 6 sont identiques. Avantageusement, cette même matière est un acier inoxydable.

Le pontet 5 peut être soudé sur une plaque intermédiaire (non représentée sur les figures), elle-même soudée sur la calotte 6 de l'article culinaire 2 dans le cas où l'intérieur de l'article culinaire 2 est revêtu par exemple par du PTFE et où l'épaisseur de la matière de l'article culinaire 2 est faible, par exemple inférieure à 0,8 millimètre. La plaque intermédiaire est préalablement soudée sur la calotte 6 avant l'application du revêtement à l'intérieur de l'article culinaire 2.

Le pontet 5 comporte une deuxième extrémité postérieure 11 comprenant une ouverture 20 en l'occurrence taraudée.

L'embase 8 a une forme générale d'un tube creux. L'embase 8 possède une première extrémité antérieure 35 adaptée à accoster la calotte 6 de l'article culinaire 2 et une deuxième extrémité postérieure 36 apte à recevoir la poignée 3 en butée.

L'extrémité 30 de la poignée 3 comprend un logement 31 adapté à recevoir le pontet 5. Un orifice 32 traversant (fig.3) est réalisé dans l'extrémité 30 de la poignée 3, dans le prolongement du logement 31. La vis 4 préalablement engagée dans l'orifice 32 est apte à coopérer avec l'ouverture 20 du pontet 5. L'orifice 32 comporte un épaulement contre lequel la tête de la vis 4 est apte à venir en butée. Avantageusement, la vis 4 peut être auto taraudeuse pour supprimer l'opération de taraudage de l'ouverture du pontet et réduire le coût de fabrication du dispositif.

Pour fixer la poignée 3 à l'article culinaire 2 en utilisant le dispositif de fixation 1 selon l'invention, on fixe d'abord les extrémités antérieures du pontet 5 à la calotte 6 de l'article culinaire 2, par soudage en fusionnant les quatre protubérances 14, 15, 16, 17 avec la calotte 6 de l'article culinaire 2. On vérifie ensuite qu'il subsiste une zone non soudée Z supérieure à un millimètre.

On introduit l'extrémité 30 de la poignée 3 dans l'extrémité postérieure 36 de l'embase 8. On positionne ensuite le logement 31 de la poignée 3 ainsi que l'embase 8 autour du pontet 5. On engage enfin la vis 4 dans l'orifice 32 de la poignée 3 et, comme l'orifice 32 et l'ouverture 20 du pontet 5 sont en regard l'un de l'autre, la vis 4 pénètre dans cette ouverture aveugle 20.

L'orifice 32 comporte un épaulement contre lequel la tête de vis 4 est apte à venir en butée. En poursuivant le vissage, la tranche de l'extrémité antérieure 35 de l'embase 8 va se trouver plaquée contre la calotte 6 de l'article culinaire et la tranche de l'extrémité postérieure 36 de l'embase 8 va se trouver plaquée contre un épaulement de la poignée 3. Pour ce faire les quatre points de soudure vont supporter l'effort de traction de la vis 4.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention. Evidement, l'étendue de la protection de l'invention reste définie par les revendications.

## Revendications

1. Dispositif de fixation (1) d'une poignée (3) sur une calotte (6) d'un article culinaire (2) comprenant un pontet (5) en forme de U adapté à être soudé par les extrémités antérieures des deux branches (12, 13) du U à la calotte de l'article culinaire (2) et comprenant une ouverture (20) à sa deuxième extrémité postérieure (11), une poignée (3) dont une extrémité (30) comporte un logement (31) qui est adapté à recevoir le pontet (5), des moyens de maintien de la poignée sur la calotte (6) de l'article culinaire (2) utilisant l'ouverture (20) du pontet (5) **caractérisé en ce que** la tranche de l'extrémité de chaque branche (12, 13) du pontet en U comporte au moins deux protubérances (14, 15, 16, 17) séparées par un évidement (18, 19).

2. Dispositif de fixation selon la revendication 1, **caractérisé en ce que**, l'évidement (18, 19) entre les deux protubérances (14, 15, 16, 17) présente une largeur (L) comprise entre 1 et 5 millimètres, de préférence 3 millimètres.

3. Dispositif de fixation selon l'une quelconque des revendications 1 à 2, **caractérisé en ce que** l'évidement (18, 19) présente une profondeur (P) comprise entre 0,8 et 3 millimètres, de préférence 1,5 millimètres.

4. Dispositif de fixation selon l'une quelconque des revendications 1 à 3, **caractérisé en ce que** la matière du pontet (5) est un acier inoxydable.

5. Dispositif de fixation selon l'une quelconque des revendications 1 à 4, **caractérisé en ce que** le pontet (5) est fabriqué par découpe d'un feuillard d'épaisseur comprise entre 0,6 millimètre et 1,2 millimètres, de préférence 0,8 millimètre.

## Claims

1. Device for fastening (1) a handle (3) onto a pan (6) of a cooking utensil (2) comprising a U-shaped bridge (5) adapted to be welded at the anterior ends of the two branches (12, 13) of the U to the pan of the cooking utensil (2) and comprising an opening (20) at the second posterior end thereof (11), a handle (3) one end (30) of which forms a housing (31) suitable for receiving the bridge (5), means for maintaining the handle on the pan (6) of the cooking utensil (2) using the opening (20) of the bridge (5), **characterised in that** the end section of each branch (12, 13) of the U-shaped bridge comprises at least two protuberances (14,15, 16, 17) separated by a recess (18, 19).

2. A fastening device according to claim 1, **characterised in that** the recess (18, 19) between the two protuberances (14, 15, 16, 17) has a width (L) of 1 to 5 millimetres, preferably 3 millimetres.

3. A fastening device according to any one of claims 1 to 2, **characterised in that** the recess (18, 19) has a depth (P) of 0.8 to 3 millimetres, preferably 1.5 millimetres.

4. A fastening device according to any one of claims 1 to 3, **characterised in that** the bridge (5) is made of stainless steel.

5. A fastening device according to any one of claims 1 to 4, **characterised in that** the bridge (5) is manufactured by cutting a sheet with a thickness of 0.6 millimetre to 1.2 millimetres, preferably 0.8 millimetre.

## Patentansprüche

1. Vorrichtung zur Befestigung (1) eines Griffes (3) am Topf (6) eines Kochartikels (2), umfassend ein U-förmiges Verbindungsstück (5), das angepasst ist, um mit den vorderen Enden der Schenkel (12, 13) des U an den Topf des Kochartikels (2) angeschweißt zu werden, und das eine Öffnung (20) an seinem zweiten rückwärtigen Ende (11) umfasst, ein Griff (3), dessen Ende (30) eine Aufnahme (31) umfasst, die angepasst ist, um das Verbindungsstück (5) aufzunehmen, Mittel zum Halten des Griffes am Topf (6) des Kochartikels (2) durch Benutzen der Öffnung (20) des Verbindungsstückes (5), **dadurch gekennzeichnet, dass** der Endabschnitt jedes Schenkels (12, 13) des U-förmigen Verbindungsstückes mindestens zwei Vorsprünge (14, 15, 16, 17) aufweist, die durch eine Aussparung (18, 19) getrennt sind.

2. Befestigungsvorrichtung nach Anspruch 1, **dadurch gekennzeichnet, dass** die Aussparung (18, 19) zwischen den zwei Vorsprüngen (14, 15, 16, 17) eine Breite (L) aufweist, die zwischen 1 und 5 Millimeter, vorzugsweise 3 Millimeter, beträgt.

3. Befestigungsvorrichtung nach einem der Ansprüche 1 bis 2, **dadurch gekennzeichnet, dass** die Aussparung (18, 19) eine Tiefe (P) aufweist, die zwischen 0,8 und 3 Millimeter, vorzugsweise 1,5 Millimeter, beträgt.

4. Befestigungsvorrichtung nach einem der Ansprüche 1 bis 3, **dadurch gekennzeichnet, dass** das Material des Verbindungsstückes (5) Edelstahl ist.

5. Befestigungsvorrichtung nach einem der Ansprüche 1 bis 4, **dadurch gekennzeichnet, dass** das Verbindungsstück (5) durch Ausstanzung aus einem Bandstahl mit einer Dicke, die zwischen 0,6 und 1,2 Millimeter, vorzugsweise 0,8 Millimeter, beträgt, hergestellt ist.
